# EUROPÄISCHE PATENTSCHRIFT

(11) **EP 0 456 142 B1**
(45) Veröffentlichungstag und Bekanntmachung des Hinweises auf die Patenterteilung: **21.06.1995**
(21) Anmeldenummer: 91107271.8
(22) Anmeldetag: 04.05.1991
(51) Int. Cl.: F16H 7/12

(54) **Verfahren zum Zusammenbau einer voreinstellbaren Spannvorrichtung**
Method of assembling of a pre-adjustable tensioning device
Procédé de montage d'un dispositif tendeur pré-réglable

(30) Priorität: 10.05.1990 DE 4015028
(43) Veröffentlichungstag der Anmeldung: 13.11.1991
(73) Patentinhaber: SKF GmbH, D-97419 Schweinfurt (DE)
(72) Erfinder: Brandenstein, Manfred, W-8781 Eussenheim (DE); Friedrich, Wolfgang, W-8720 Schweinfurt (DE); Haas, Roland, W-8729 Hofheim (DE); Herrmann, Gerhard, W-8720 Schweinfurt (DE); Olschewski, Armin, W-8720 Schweinfurt (DE)

(56) Entgegenhaltungen:
- DE-A- 2 524 744
- DE-C- 3 908 817
- DE-C- 3 908 818
- US-A- 4 472 162

## Beschreibung

Die Erfindung betrifft ein Verfahren zum Zusammenbau einer voreinstellbaren Spannvorrichtung nach dem Oberbegriff des Hauptanspruches.

Durch die US-PS 4 472 162 ist bereits eine Spannvorrichtung bekannt, bei der die Feder mit ihrem stationären Ende in einer Ausnehmung eines mehrteiligen Tragkörpers angeordnet ist. Unter anderem ist ein topfförmiger Blechkörper vorgesehen, der mit einem Vorsprung in eine Tragplatte einrastet und somit verdrehgesichert ist. Dadurch ist auch die Spannung der Feder bzw. der Arbeitspunkt festgelegt und kann nicht mehr verstellt werden. Da die verwendeten Federn bedingt durch die Fertigung bzw. in Folge von Materialfehlern starken Schwankungen der Federkräfte unterliegen, ist beim Serieneinbau mit stark streuenden Ergebnissen zu rechnen.

Aus diesem Grund wurde bereits in der deutschen Patentanmeldung P 39 08 817.0 (entspricht der Patentschrift DE-C-39 08 817, veröffentlicht am 10.05.1990) vorgeschlagen, die Spannvorrichtung nach der Fertigung auf den Wert des späteren Arbeitspunktes vorzuspannen und in dieser Stellung Markierungen etc. anzubringen, die ein Wiederauffinden der Stellung mit definierter Spannkraft ermöglichen. Wenn die Spannvorrichtung jedoch mit Einrichtungen zur Begrenzung des Schwenkbereiches oder mit anderen Merkmalen versehen ist, die eine orientierte Einbaulage vorschreiben, sind die bekannten Ausführungen nicht ohne weiteres verwendbar.

Aufgabe der Erfindung ist es, ein Verfahren zum Zusammenbau einer voreinstallbaren Spannvorrichtung der eingangs genannten Art zu schaffen, womit bei fest vorgegebener Einbauposition nur gering voneinander abweichende Spannkraftwerte erreicht werden.

Die Aufgabe wird durch folgende Arbeitsgänge gelöst:
- Schwenken der Spannvorrichtung auf einen gekennzeichneten Arbeitspunkt,
- Spannen der Feder auf eine der Spannkraft im eingebauten Zustand entsprechende, durch einen Meßvorgang ermittelte Federkraft,
- Befestigen des Stellelementes in dieser Position.

Das Stellelement weist eine Bohrung, Ausnehmung, etc. zur Aufnahme des betreffenden Endes der Feder auf und kann zunächst frei verstellt werden. Je nach Anforderung kann das Stellelement am schwenkbeweglichen Tragkörper befestigt werden, wobei das andere Ende der Feder im Montageelement eingerastet ist oder das Stellelement wird am Montageelement befestigt, wobei das andere Ende der Feder am Tragkörper einrastet. Durch Verdrehen des Stellelementes wird in beiden Fällen ein Spannen der Feder bewirkt. Dies geschieht am besten nach dem Zusammenbau der Spannvorrichtung als letzter Arbeitsgang in einer Vorrichtung, die beispielsweise das Reaktionsmoment der gespannten Feder anzeigt. Wenn das gewünschte Moment eingestellt ist, wird das Stellelement mit dem betreffenden - Tragkörper bzw. Montageelement - verdrehgesichert verbunden. Wenn die in der Vorrichtung simulierte Stellung am Motorblock realisiert wird, stellen sich die voreingestellten Werte vorteilhafterweise automatisch wieder ein.

Diese und weitere Merkmale werden nachfolgend an den in der Zeichnung dargestellten Beispielen beschrieben.

Es zeigen:
- Figur 1: den teilweisen Längsschnitt einer Spannvorrichtung mit nach dem Einstellen befestigtem Stellelement,
- Figur 2: die Draufsicht der Spannvorrichtung nach Figur 1 und
- Figur 3: den teilweisen Längsschnitt einer Spannvorrichtung mit einem durch einen Bajonettverschluß befestigten Stellelement.

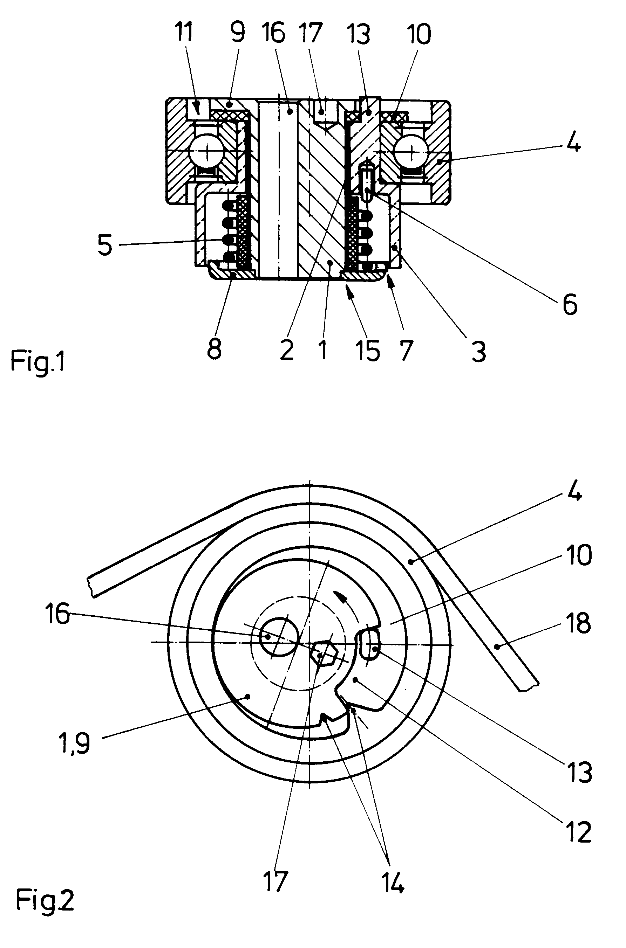

Die Spannvorrichtung nach Figur 1, 2 besteht aus einem Montageelement 1, einem darauf über eine Gleitbuchse 2 schwenkbaren Tragkörper 3 und einer darauf drehbar gelagerten Spannrolle 4. In einem Ringraum zwischen Tragkörper 3 und Montageelement 1 ist eine Schraubenfeder 5 vorgesehen, wobei eines der Enden 6 in eine Sackbohrung des Tragkörpers 3 eingreift. Das zweite Ende 7 greift in ein Stellelement 8 ein, das in der dargestellten Position mit dem Montageelement 1 verdreh- und axialgesichert befestigt ist. Das Montageelement 1 ist mit einem Flansch 9 versehen, der unter Zwischenschaltung einer Kunststoffscheibe 10 teilweise an der Seitenfläche des Lagers 11 anliegt. Weiterhin ist eine in Umfangsrichtung begrenzte Ausnehmung 12 vorgesehen, die zusammen mit einem axialen Vorsprung 13 des Tragkörpers 3 eine Begrenzung der Schwenkbewegung bewirkt. Die Kunststoffscheibe 10 ist, wie aus Figur 2 hervorgeht, mit einer Kerbe 14 versehen, die zusammen mit einer weiteren Kerbe 14 im Flansch 9 den mittleren Arbeitspunkt innerhalb des Schwenkbereiches kennzeichnen, wenn sie abweichend von der dargestellten Stellung durch Schwenken zur Deckung gebracht werden. Die Stellung nach Figur 2 zeigt den Ruhezustand der entspannten Spannvorrichtung, jedoch bei noch vorgespannter Schraubenfeder 5, wobei der Vorsprung 13 am Umfangsende der Ausnehmung 12 anschlägt.

Die Einstellung der Spannvorrichtung erfolgt wie nachstehend beschrieben:
Nach dem Zusammenbau folgt als letzter Schritt die Einstellung der Federkraft und die Befestigung des Stellelementes 8. Dazu wird die Spannvorrichtung in einer einfachen, nicht dargestellten Vorrichtung geschwenkt, bis beide Kerben 14 sich decken. Damit ist die Mitte des Schwenkbereiches und damit der später angestrebte Arbeitspunkt eingestellt. In dieser Stellung wird die Schraubenfeder 5 durch Drehen des in das zweite Ende 7 der Schraubenfeder 5 eingreifenden Stellelementes 8 gespannt. Mit einer bekannten Vorrichtung wird dabei das Reaktionsmoment der Schraubenfeder 5 überwacht. Bei Erreichen des gewünschten Wertes wird das Stellelement 8 auf einen vorbereiteten, mit einer nicht dargestellten Randelung versehenen Absatz 15 des Montageelementes 1 aufgepreßt. Nachträglich wird der Sitz verstemmt, wodurch sich eine hohe Sicherheit gegen Verdrehen und axiales Bewegen ergibt. Durch das individuelle Einstellen jeder Spannvorrichtung auf den gleichen Wert der Federkraft stets in der Mitte des Schwenkbereiches wird in der Serie eine praktisch gleichbleibende Spannkraft für alle Spannvorrichtungen erzielt.

Damit ist die Fertigung abgeschlossen. Beim Einbau an den Motorblock wird die Spannvorrichtung mit einem durch eine exzentrisch angeordnete Befestigungsbohrung 16 hindurchgeführten Bolzen zunächst lose verschraubt. Mit einem in einen Innensechskant 17 eingesetzten Verstellwerkzeug wird die Spannvorrichtung gegen den in Figur 2 dargestellten Treibriemen 18 geschwenkt. Wenn sich dieser spannt, wirkt eine Reaktionskraft auf die Spannvorrichtung. Bei weiterem Schwenken spannt sich die Schraubenfeder 5 und das Montageelement 1 schwenkt in Pfeilrichtung und verläßt die in Figur 2 dargestellte Anschlagposition am Vorsprung 13. Der Schwenkvorgang wird solange fortgesetzt, bis die beiden Kerben 14 sich decken. Dann befindet sich, wie nicht dargestellt ist, der Vorsprung 13 in der Mitte der Ausnehmung 12 bzw. des Schwenkbereiches und genau an der Stelle der Voreinstellung. In dieser Lage wird der Bolzen festgeschraubt.

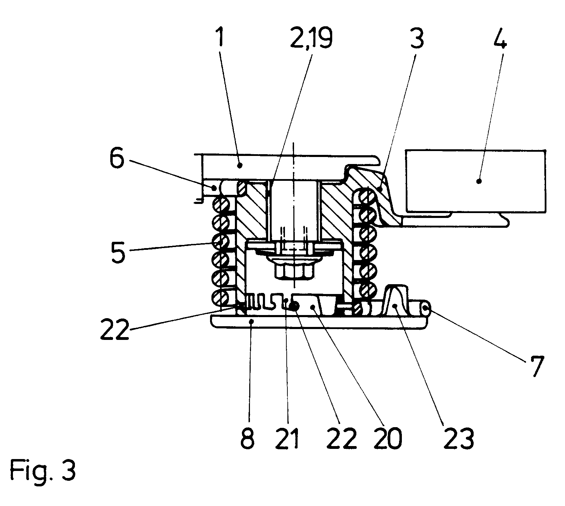

Bei der in Figur 3 dargestellten Spannvorrichtung ist ein hebelförmiger Tragkörper 3 vorgesehen. An einem Ende ist die Spannrolle 4 am anderen ein Schwenklager 19 vorgesehen. Eine Schraubenfeder 5 wirkt zwischen einer Montageplatte 1 und einem Stellelement 8, das mit Bajonett-Verriegelungen 21, 22 am Tragkörper 3 befestigt ist. Diese bestehen aus einer Vielzahl am Umfang des Stellelementes verteilter und in einen Sitzring 20 eingearbeiteten Bajonett-Ausnehmungen 21 und z. B. 4 am Umfang verteilten radial in den Tragkörper 3 eingesetzten Stiften 22. Nach dem Zusammenbau der Spannvorrichtung wird das Stellelement 8 gegenüber dem Tragköprer 3 verdreht, wobei das betreffende Ende 7 der Schraubenfeder 5 in einen Hakenvorsprung 23 einrastet. Die Verstellung kann den Schritten der Bajonett-Teilung gemäß vorgenommen werden. Auch hier kann eine Einstellung, wie zu dem vorangehenden Beispiel beschrieben, mit Markierungen und begrenzten Schwenkbereich vorgesehen werden, wenn dies auch aus Figur 3 nicht hervorgeht.

## Patentansprüche

1. Verfahren zum Zusammenbau einer voreinstellbaren Spannvorrichtung mit einem Montageelement (1), einem darauf über eine Feder (5) schwenkbaren Tragkörper (3) und einer daran befestigten Spannrolle (4), wobei ein Ende (7) der Feder in einem gegenüber dem anderen Ende (6) drehbaren Stellelement (8) angeordnet ist, gekennzeichnet durch die folgenden Arbeitsgänge:
- Schwenken der Spannvorrichtung auf einen gekennzeichneten Arbeitspunkt (14),
- Spannen der Feder (5) auf eine der Spannkraft im eingebauten Zustand entsprechende, durch einen Meßvorgang ermittelte Federkraft,
- Befestigen des Stellelementes (8) in dieser Position.

2. Verfahren nach Anspruch 1 oder 2, dadurch gekennzeichnet, daß für die Befestigung Formschlußelemente (12, 13) vorgesehen sind.

3. Verfahren nach Anspruch 1 oder 2, dadurch gekennzeichnet, daß Elemente (21, 22) nach der Art des Bajonett-Verschlußes vorgesehen sind.

## Claims

1. A method of assembling of a pre-adjustable tensioning device comprising a mounting element (1), a support (3) pivoting on it on a spring (5) and a pulley (4) fixed to it, with one end (7) of the spring engaging an adjusting element (8) rotating relative to the other end (6), characterised by the following operations:
- Swivelling of the tensioning device to a marked working point (14),
- Tensioning of the spring (5) to a spring force corresponding to the tension force in mounted condition, which was determined by measurement,
- Locking of the adjusting element (8) in this position.

2. A method according to Claims 1 or 2, characterised in that positive locking elements (12, 13) are provided for location.

3. A method according to Claims 1 or 2, characterised in that elements (21, 22) in the form of a bayonet catch are provided.

## Revendications

1. Procédé de montage d'un dispositif tendeur pré-réglable comportant un élément de montage (1), un support (3) monté mobile en rotation sur un ressort (5) et un galet tendeur (4) monté mobile en rotation sur le galet tendeur, l'une des extrémités (7) du ressort étant positionnée dans un élément de réglage (8) monté mobile en rotation par rapport à l'autre extrémité, caractérisé par les opérations suivantes:
- Pivotage du dispositif tendeur à un point de fonctionnement marqué (14),
- Mise ein précontrainte du ressort (5) à un effet de ressort correspondant à celui en condition montée qui fut déterminé à l'aide d'une mesure,
- Fixation de l'élément de réglage (8) dans cette position.

2. Procédé selon la revendication 1 ou 2, caractérisé par des éléments de sécurité de blocage (12, 13) pour la fixation.

3. Procédé selon la revendication 1 ou 2, caractérisé par des éléments (21, 22) du type d'un verrouillement de baïonnette.
